(19)

**Europäisches Patentamt**
**European Patent Office**
**Office européen des brevets**

(11) **EP 4 624 437 A1**

(12) **EUROPEAN PATENT APPLICATION**

(43) Date of publication:
**01.10.2025 Bulletin 2025/40**

(21) Application number: **24305475.6**

(22) Date of filing: **28.03.2024**

(51) International Patent Classification (IPC):
***C04B 11/028*** (2006.01)   ***C04B 11/032*** (2006.01)

(52) Cooperative Patent Classification (CPC):
**C04B 11/028; C04B 11/032**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SAINT-GOBAIN PLACO**
**92400 Courbevoie (FR)**

(72) Inventors:
• **MAGAUD, Lionel**
**84300 Cavaillon (FR)**

• **MILLOT, Yannick**
**84300 Cavaillon (FR)**
• **FRANCY, Olivier**
**84300 Cavaillon (FR)**
• **COLOMBO, Joel**
**84300 Cavaillon (FR)**
• **MONTIGNY, Benoit**
**92400 Courbevoie (FR)**
• **TRAN, Binh**
**92400 Courbevoie (FR)**
• **DOMINGUEZ MARTINEZ, Alejandro**
**28002 Madrid (ES)**

(74) Representative: **Murgitroyd & Company**
**165-169 Scotland Street**
**Glasgow G5 8PL (GB)**

(54) **METHOD OF PROCESSING GYPSUM**

(57) A process for the production of alpha-calcium sulphate hemihydrate, the process comprising the steps of: providing an input comprising particulate gypsum and an impurity; providing water; mixing the input and the water to form a gypsum slurry; maintaining the gypsum slurry under raised pressure and temperature to convert the particulate gypsum into alpha-calcium sulphate hemihydrate; and providing an alpha-calcium sulphate hemihydrate slurry; in order to provide an output comprising alpha-calcium sulphate hemihydrate with a reduction in the amount or activity of an impurity compared to the input or wherein the output comprises the impurity in a changed form compared to the input.

**EP 4 624 437 A1**

**Description**

**Field of the Disclosure**

The present invention relates to a process for the continuous preparation of alpha-calcium sulphate hemihydrate.

**Background**

Gypsum occurs naturally as a raw material in the form of calcium sulphate dihydrate ($CaSO_4$ $2(H_2O)$). Gypsum containing products, such as plasterboard, are prepared by forming a mixture of calcined or dehydrated gypsum, namely calcium sulphate hemihydrate ($CaSO_4$ $0.5(H_2O)$), with water, to form a settable slurry that is then cast into a pre-determined shape. The calcium sulphate hemihydrate reacts with the water and becomes re-hydrated to the dihydrate crystal, which is then cured or dried to the solid state.

The calcium sulphate hemihydrate can be categorised into two basic forms, alpha-calcium sulphate hemihydrate and beta-calcium sulphate hemihydrate. Beta-calcium sulphate hemihydrate is typically formed by heating gypsum in air at ambient humidity or raised humidity and at ambient (i.e. atmospheric) pressure. On the other hand, alpha-calcium sulphate hemihydrate is produced from gypsum in steam or water under conditions of elevated temperature and pressure. Whilst both alpha-calcium sulphate hemihydrate and beta-calcium sulphate hemihydrate can be used to create gypsum products, a gypsum matrix made with alpha-hemihydrate tends to be harder, with greater strength and density. This means that in combination with foam, alpha-hemihydrate can be used to make a lightweight board which is harder and stronger than the same weight board made with beta-hemihydrate. In addition, alpha-hemihydrate produces a more fluid slurry, which means that less water can be used and therefore the energy requirement for drying the boards is reduced.

In commercial industrial environments where gypsum products are continuously produced, it is often desirable or necessary to continuously produce alpha-calcium sulphate hemihydrate. The continuous production of alpha-calcium sulphate hemihydrate can be more difficult than a batch production process, as there is a need to control the parameters of the production process continually and in real time.

A continuous wet calcination process for the production of alpha-calcium sulphate hemihydrate typically involves particles of gypsum being combined with water, and then this gypsum slurry being calcined at conditions of raised temperature and pressure to produce an alpha-calcium sulphate hemihydrate slurry. The particles of alpha-calcium sulphate hemihydrate are then separated from the majority of the water in the slurry in a filtration or separation process to produce a cake of alpha-calcium sulphate hemihydrate and a separate water stream.

Alpha-calcium sulphate hemihydrate manufactured in solution via the "wet alpha" process is a monocrystal with different crystal planes. The aspect ratio (length to width) of the crystals of alpha-calcium sulphate hemihydrate is influenced by the elements, compounds and substances present in the gypsum slurry during the calcination process. These elements, substances and compounds, known as habit modifiers, can change the aspect ratio of the particles of alpha-calcium sulphate hemihydrate by preferentially adsorbing on to specific faces of the crystals during formation, substituting themselves into the crystal lattice or by reacting with calcium and/ or sulphate ions in the solution to decrease the concentration of these ions.

Habit modifiers can be present due to impurities within the gypsum used in the calcination process (e.g. magnesium from dolomite) or be incorporated into the gypsum slurry deliberately (e.g. succinic acid).

Impurities in the gypsum can have a detrimental impact on the processes involved in gypsum product production including board forming and drying. Impurities in the gypsum used to produce boards can lead to boards with higher weights and higher water gauges. Impurities can also present challenges when manufacturing moisture resistant boards. Manufacturing boards using gypsum with impurities can require increased amounts of additives in light of these issues.

Impurities may be found in natural gypsum. Impurities may also be found in recycled gypsum obtained from gypsum products such as gypsum plasterboard. Impurities can be a particular problem for recycled gypsum obtained from moisture resistant gypsum products that contain hydrophobic additives such as silicones. These hydrophobic additives can be detrimental to the production of subsequent gypsum products as they can destabilize the foam used in the slurry.

Aspects of the present disclosure seek to provide a method of processing gypsum that alleviates these problems with prior known systems. In particular, aspects of the present disclosure seek to provide a method of processing gypsum that reduces the amount, activity or form of impurities in the processed gypsum.

**Summary**

According to a first aspect of the present disclosure, there is provided a process for the production of alpha-calcium sulphate hemihydrate, the process comprising the steps of: providing an input comprising particulate gypsum with at least one impurity; providing water; mixing the input and the water to form a gypsum slurry; maintaining the gypsum slurry under raised pressure and temperature to convert the particulate gypsum into alpha-calcium sulphate hemihydrate;

and providing an output slurry comprising a first phase and a second phase; characterised in that the first phase of the output slurry comprises alpha-calcium sulphate hemihydrate and the first phase comprises a greater amount of alpha-calcium sulphate hemihydrate than the second phase; and; the at least one impurity at a reduced weight % in the first phase of the output slurry compared to the input mixture; and/or the at least one impurity at a reduced activity compared to the input mixture; and/or the at least one impurity in a different chemical form or with a different chemical structure compared to the input mixture.

In this way, the process can produce alpha-calcium sulphate hemihydrate with improved properties from impure gypsums. Additionally, gypsums with higher levels of impurities can be used to produce alpha-calcium sulphate hemihydrate with acceptable properties. In other words, the process allows a wider range of gypsums to be used to produce alpha-sulphate hemihydrate suitable for the production of gypsum products.

Preferably, the process for the production of alpha-calcium sulphate hemihydrate is continuous. In this way, the process can continuously produce alpha-calcium sulphate hemihydrate with improved properties from impure gypsums.

Preferably, the output slurry comprises the at least one impurity at less than 75% of the wt.% of the impurity in the input mixture. More preferably, the output slurry comprises the at least one impurity at less than 50% of the wt.% of the impurity in the input mixture. More preferably, the output slurry comprises the at least one impurity at less than 25% of the wt.% of the impurity in the input mixture. More preferably, the output slurry comprises the at least one impurity at less than 10% of the wt.% of the impurity in the input mixture.

Preferably, the raised temperature is in the range 130 to 150°C inclusive. More preferably, the raised temperature is in the range 140 to 145°C inclusive.

Preferably, the average residence time of the gypsum slurry at raised temperature is at least 30 minutes, preferably wherein the average residence time is at least 40 minutes. More preferably, the average residence time of the gypsum slurry at raised temperature is in the range of 40 to 45 minutes.

Preferably, the mixing step is carried out in a mixing tank comprising an agitator. In this way, homogenous mixing can be achieved.

Preferably, the process comprises preheating the gypsum slurry to a temperature of 90 to 95°C. Preferably, the gypsum slurry is preheated using direct steam injection.

Preferably, the step of maintaining the gypsum slurry under raised pressure and temperature to convert the particulate gypsum into alpha-calcium sulphate hemihydrate is carried out within at least one calcination vessel.

Preferably the pressure in the calcination vessel is in the range of 2 to 4.5 bars inclusive. More preferably, the pressure in the calcination vessel is in the range of 3 to 4.5 bars inclusive.

Preferably, the calcination vessel comprises an agitator for mixing. In this way, mixing efficiency is increased and gypsum scaling at the walls of the calcination vessel is reduced.

Preferably, the step of maintaining the gypsum slurry under raised pressure and temperature to convert the particulate gypsum into alpha-calcium sulphate hemihydrate is carried out within a first and second calcination vessel, and further wherein the temperature in the second calcination vessel is higher than the temperature within the first calcination vessel. Preferably, the temperature in the first calcination vessel is up to 120°C. Preferably, the temperature in the second calcination vessel is in the range of 140 to 150°C inclusive. Preferably, the average particle residence time in the second calcination vessel is in the range of 35 to 40 minutes.

Preferably, the step of providing water comprises substantially continuously providing water. Preferably, the step of providing the input comprises substantially continuously providing the input.

Preferably, the process comprises providing a habit modifier in the gypsum slurry. The incorporation of a habit modifier in the gypsum slurry may assist in controlling the shape and form of the alpha-calcium sulphate hemihydrate crystals produced by the process.

Preferably, the habit modifier comprises succinic acid and/or potassium sulphate. Preferably, the succinic acid is provided in a ratio of at least 1 part succinic acid to 1000 parts slurry volume where the slurry volume is calculated based on the volume of the water and the gypsum. Preferably, the potassium sulphate is provided in a ratio of at least 2 parts potassium sulphate to 1000 parts slurry volume where the slurry volume is calculated based on the volume of the water and the gypsum. Preferably, the potassium sulphate is provided in a ratio of up to 5 parts potassium sulphate to 1000 parts slurry volume where the slurry volume is calculated based on the volume of the water and the gypsum. Preferably, the potassium sulphate is provided in a ratio of 2 to 5 parts potassium sulphate to 1000 parts slurry volume where the slurry volume is calculated based on the volume of the water and the gypsum.

Preferably, the process comprises a cooling step where the temperature of the alpha-calcium hemihydrate slurry is reduced and the pressure is brought to atmospheric pressure. Preferably, the temperature of the slurry is reduced to below 100°C. Preferably, the temperature of the slurry is reduced to a temperature in the range of 80 to 95°C inclusive.

Preferably, the cooling step is carried out using a vessel with a pressure vent.

Preferably, the process comprises a dewatering step where water is removed from the alpha-calcium sulphate hemihydrate slurry.

Preferably, the dewatering step comprises separating the alpha-calcium sulphate hemihydrate slurry into a filtrate and an alpha-calcium sulphate hemihydrate cake. Preferably, a vacuum filtration belt is used to carry out the dewatering step. In this way, the filtrate is removed and recovered from the slurry using the vacuum belt system.

Preferably, the filtrate is re-used in the process. More preferably, the filtrate is added in the mixing step. In this way, any water soluble additives in the filtrate can be retained and reused in the process. For example, growth modifiers such as succinic acid can be recovered and reused. Preferably, the filtrate is added before the step of maintaining the gypsum slurry under raised pressure and temperature. In this way, the energy of the filtrate can be recovered and used in the process.

Preferably, the filtrate comprises at least some of the at least one impurity. In this way, at least some of the impurity can be removed from the gypsum. Preferably, the process comprises processing the filtrate to remove impurities before re-using the filtrate in the process. In this way, impurities can be removed from the filtrate so that they are not returned to the slurry. Preferably, the process comprises measuring a concentration of an impurity in the filtrate. More preferably, the process further comprises using the measured concentration of the impurity in the filtrate to determine the treatment of the filtrate, wherein if the measured impurity concentration is below a reference value, the filtrate is re-used in the process, and wherein if the impurity concentration of the filtrate is above the reference value, the filtrate is first processed to lower the impurity concentration before being re-used in the process. In this way, the treatment of the filtrate to reduce impurity levels is only carried out when the filtrate has a predetermined impurity concentration. In this way, the processing of the filtrate may be reduced.

Preferably, the process comprises a drying stage after the dewatering stage, wherein further water is removed from the alpha-calcium sulphate hemihydrate. In this way, the risk of further reaction is reduced. Further reaction is of particular concern if the temperature decreases below 80°C. Preferably, a flash drying column is used for the drying stage.

Preferably, the process comprises a milling step where the alpha-calcium sulphate hemihydrate is milled. In this way, the alpha-calcium sulphate hemihydrate can be milled to the required granulometry for the production of gypsum products.

In some embodiments, the impurity comprises a water soluble salt. In this way, the process can provide alpha-calcium sulphate hemihydrate with reduced water soluble impurities from gypsum comprising water soluble salts. In this way, there are provided benefits for both the process of providing gypsum products and improved properties of the gypsum products made using the alpha-calcium sulphate hemihydrate. The processed alpha-calcium sulphate hemihydrate provide better wet bonding properties and a lower risk of blistering during the drying stages. Gypsum boards produced using the processed alpha-calcium sulphate hemihydrate have been found to have rehumidified bonding and moisture resistance.

In some embodiments, the impurity comprises at least one selected from the list consisting of: $Cl^-$, $F^-$, $Mg^{2+}$, $Na^+$, $K^+$, quartz, silica, clay, $Fe^{2+}$, $Mn^{2+}$, carboxylic acids, Ni, Zn, Ti, Pb, Hg, As, CaO, $P_2O_5$, $NO_3$, silicone oil, $MgCO_3$, $CaCO_3$, clays and silicates, and/or a mixture thereof.

In some embodiments, the impurity comprises at least one selected from the list consisting of: $MgCO_3$, $CaCO_3$, clays and silicates, and/or a mixture thereof.

Preferably, the input comprises natural gypsum, recycled gypsum, and/or synthetic gypsum. Examples of recycled gypsum include gypsum obtained as scrap during the production of gypsum products, and gypsum obtained from used or waste gypsum products such as plasterboards.

Preferably, the ratio of water to gypsum is approximately 1:1.

The weight % (wt.%) of the impurity in the input mixture is defined as the mass of the impurity in the input mixture relative to the relative to the mass of calcium sulphate dihydrate in the input mixture. The wt.% of the impurity in the output slurry is defined as the mass of the impurity in the output slurry relative to the mass of calcium sulphate hemihydrate in the output slurry. The wt.% of the impurity in the first phase of the output slurry is defined as the mass of the impurity in the first phase of the output slurry relative to the mass of alpha-calcium sulphate hemihydrate in the first phase of the output slurry.

The activity of the impurity is defined as the effect of the impurity on the properties of the calcium sulphate. For example, it is believed that the step of maintaining the gypsum slurry at an increased temperature and pressure reduces the impact of silicone oils in the slurry.

Preferably, the at least one impurity comprises paper fibres. Preferably, the activity of the impurity comprises an increase in viscosity of the slurry. The presence of paper fibres in the calcium sulphate can increase the viscosity of the slurry. If the viscosity of the slurry is high, problems can occur during the manufacture of gypsum products. In order to work with slurries of higher viscosities, specialist mixers or heating tanks may be required. The process of the present invention may reduce the effect of the paper fibres on the viscosity of the slurry. In this way, the process can use calcium dihydrate comprising paper fibres to produce an alpha-calcium sulphate hemihydrate slurry with reduced viscosity. In this way, the process can use calcium dihydrate comprising paper fibres to provide an alpha-calcium sulphate hemihydrate slurry with improved workability for the manufacture of gypsum products.

Preferably, the at least one impurity comprises an acidic impurity. Synthetic gypsums may often have a low pH which can cause issues in the gypsum product manufacturing process. Preferably, the process comprises adding base to the input mixture. In this way, the pH of the mixture can be increased and the disadvantages resulting from the acidity can be reduced. The wet calcination process of the present invention allows for the removal of the acidic impurity which is transferred in the water and for the easy addition of a base to control pH, unlike the dry calcination processes of the prior art.

Preferably, the particulate gypsum comprises lacto gypsum. Lacto gypsum is defined as gypsum having lactic acid as an impurity. Calcining lacto gypsum in the wet calcination process of the present invention releases the lactic acid impurity from the lacto gypsum into the solution. In this way, the products of the calcination process can be filtered to separate the alpha-calcium sulphate hemihydrate and the lactic acid impurity. In this way, the lacto gypsum can be calcined to form alpha-calcium sulphate hemihydrate with an increased purity. It was found that dry calcination of lacto gypsum, not in line with the present invention, did not release the lactic acid impurity.

Preferably, the process comprises adding base to the input mixture comprising lacto gypsum, to adjust the pH of the input mixture to at least 5.9. In this way, the resulting alpha-calcium sulphate hemihydrate has an improved particle size distribution and span. Span is defined using the following equation:

$$span = \frac{D90 - D10}{D50}$$

Adjusting the pH of the input mixture to at least 5.9 has been found to decrease the span to levels usable for plasterboard applications, which were similar to the span of calcium sulphate hemihydrate currently used for gypsum plasterboard production.

Preferably, the lacto gypsum is produced in the polylactic acid manufacturing industry. In this way, gypsum produced as a by-product in the polylactic acid manufacturing industry can be calcined to alpha-calcium sulphate hemihydrate to be used to form gypsum products.

Lacto gypsum is often supplied with a high moisture content of 15-30% relative to the total weight of water and gypsum. Therefore, if lacto gypsum was to be in used in the dry calcination processes of the prior art, the lacto gypsum would first need to be dried to reduce the moisture content. In this way, using lacto gypsum in the wet calcination process of the present invention allows the lacto gypsum to be calcined without the need for an initial drying step with a high energy requirement. Additionally, the high moisture content of the lacto gypsum reduces the amount of after that needs to be provided for the wet calcination of the present invention. In this way, using lacto gypsum in the process of the present invention can reduce the water requirement.

In some embodiments, the particulate gypsum comprises citrogypsum. Citrogypsum is defined as gypsum having citric acid as an impurity. Citric acid can retard the setting of calcium sulphate hemihydrate and it therefore may be desirable to remove the citric acid from citrogypsum. Calcining citrogypsum in the wet calcination process of the present invention releases the citric acid impurity from the citrogypsum into the solution. In this way, the products of the calcination process can be filtered to separate the alpha-calcium sulphate hemihydrate and the citric acid impurity. In this way, the citrogypsum can be calcined to form alpha-calcium sulphate hemihydrate with an increased purity. It was found that dry calcination of citrogypsum, not in line with the present invention, did not release the citric acid impurity.

**Brief Description of the Drawings**

The disclosure will be further described with reference to examples depicted in the accompanying figures in which:

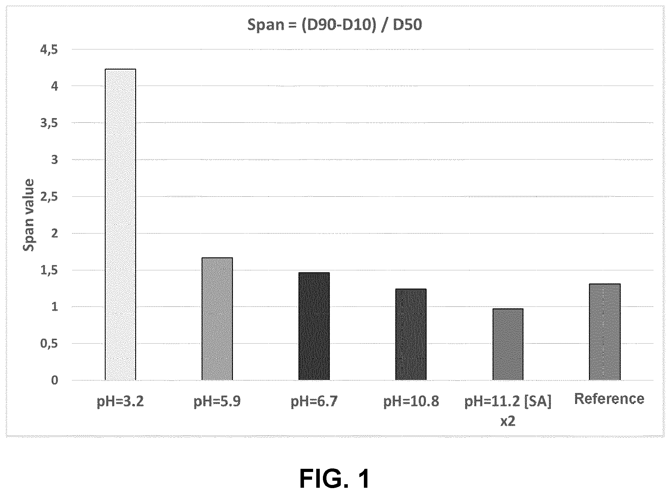

Figure 1 is a graph showing the particle size span of the alpha-calcium sulphate hemihydrate resulting from the calcination of lacto gypsum input mixtures adjusted to different pH values.

**Detailed Description**

The following description presents particular examples and serves to explain principles of the disclosure. However, the scope of the invention is not intended to be limited to the precise details of the examples, since variations will be apparent to a skilled person and are deemed to be covered by the description. Terms for components used herein should be given a broad interpretation that also encompasses equivalent functions and features.

As part of the development of the present invention, the inventors conducted a series of trials. Alpha-calcium sulphate hemihydrate slurries were produced by batch wet calcination in a reactor using succinic acid as a habit modifier. In these experiments, four different sources of gypsum were used, and in each case the gypsum was calcined for a period of 40 minutes at a temperature of 145 ± 5 °C, a pressure of 300 000 ± 50 000 Pa. and a water to gypsum ratio of 1.

In each case, after calcination, the resulting alpha-calcium sulphate hemihydrate slurry was filtered to recover, as a filtrate, between 69% and 77% of the water introduced into the reactor. After removal of the filtrate using a Buchner funnel with a paper filter and a vacuum pump, the cake of alpha-calcium sulphate hemihydrate was soaked in isopropanol and filtered for a second time with the Buchner apparatus. Finally, the cake was placed into a drying oven at 40°C to eliminate any isopropanol residue.

Tests were carried out on Example slurries made according to the process of the present invention and on Comparative Examples made according to processes not of the present invention.

Embodiment 1:

Alpha-calcium hemihydrate was prepared according to the wet calcination process of the invention. Alpha-calcium hemihydrate slurries comprising varying amounts of paper fibres were prepared. In the Example slurries, the paper fibres were calcined according to the process of the present invention. In the Comparative Example slurries, the paper fibres were not calcined. The spread diameter of the Example and Comparative Example slurries was measured. In Trial 1 and Trial 2, the slurries comprise 40 wt.% water relative to the weight of calcium sulphate hemihydrate. In a Turbula mixer, 300g of industrial grade alpha-calcium sulphate hemihydrate was mixed with a solid accelerator. In a separate mixer, for each example and comparative example, the given weights of calcined or uncalcined fibres were mixed with water, a retardant, and an accelerant. The two preparations were then combined in a VMI mixer at 3300 RPM for 30 seconds. The spread diameter of the Example and Comparative Example slurries was measured in a slump test according to ASTM C143/C143M-12.

The Brookfield viscosity of the Example and Comparative Example slurries was also measured. The slurries had a water to calcium sulphate ratio of 1:1. The slurries were mixed at a velocity of 100 rpm. The results of the spread and viscosity tests are set out in Table 1 below.

Table 1

|  | Calcined Paper Fibre (relative to the dry weight of the calcium sulphate material) | Uncalcined Paper Fibre (relative to the dry weight of the calcium sulphate material) | Spread Diameter (mm) | | Brookfield viscosity (mPa·s) |
|---|---|---|---|---|---|
|  |  |  | Trial 1 | Trial 2 |  |
| Example 1 | 0.50% | 0% | 249.5 | 250 | 56 |
| Example 2 | 1.0% | 0% | 242 | 242 | 60 |
| Example 3 | 2.0% | 0% | 173.5 | 188.5 | 77.5 |
| Comparative Example Control | 0% | 0% | 260 | 260 | 52 |
| Comparative Example 1 | 0% | 0.50% | 240 | 243 | 60 |
| Comparative Example 2 | 0% | 1.0% | 200 | 215 | 75 |
| Comparative Example 3 | 0% | 2.0% | 137.5 | 137.5 | 152 |

Each of the Examples 1-3 of the present invention have a higher spread diameter than the corresponding Comparative Example 1-3. Each of the Examples 1-3 of the present invention have a lower viscosity than the corresponding Comparative Example 1-3. Accordingly, the process of the present invention can be used to provide alpha-calcium sulphate hemihydrate slurries with improved physical properties thanks to a reduced activity of the wet calcined paper fibres.

The greater the amount of paper fibre impurity present, the greater the effect of the calcination process of the present invention on the spread diameter and viscosity of the slurries.

Embodiment 2:

Example slurries were made according to the wet calcination process of the present invention and Comparative Examples were made according to dry calcination processes not of the present invention.

The Example slurries were prepared by mixing the input with water to form a gypsum slurry, maintaining the gypsum slurry under raised pressure of 300 000 $\pm$ 50 000 Pa and temperature of 145 ° $\pm$ 5 °C to convert the particulate gypsum into alpha-calcium sulphate hemihydrate.

The Comparative Example slurries were prepared by maintaining the input mixture under atmospheric pressure and raised temperature of 140°C to convert the particulate gypsum into beta-calcium sulphate hemihydrate.

The composition of the Example and Comparative Example were characterised using phase analysis to identify the amounts of calcium sulphate and impurities present. The phase analysis comprised two steps: a loss on ignition analysis step and an X-ray fluorescence spectrometry analysis step. The loss on ignition analysis step was used to quantify the main calcium sulphate phases (dihydrate and hemihydrate). The X-ray fluorescence spectrometry analysis step was used to quantify the impurities and the remaining calcium sulphate phase (anhydrite). The loss on ignition analysis was carried out using a LECO Thermogravimetric Analyzer at a temperature of 240°C. The X-ray fluorescence spectroscopy was carried out using a Zetium XRF Elemental Analyzer.

Example 4 and Comparative Example 4 were prepared from input mixture 4 using Natural Gypsum from a first quarry. Example 5 and Comparative Example 5 were prepared from input mixture 5 using Natural Gypsum from a second quarry. Examples 4 and 5 are the output mixtures resulting from the wet calcination of the input mixtures to form alpha-calcium sulphate hemihydrate according to the present invention. Comparative Examples 4 and 5 are the output mixtures resulting from the dry calcination of the input mixtures to form beta-calcium sulphate hemihydrate not according to the present invention.

The results of the materials characterisations are set out in Table 2 below. The remaining wt.% of the compositions not shown in Table 2 are made up by further impurities including SrO, $K_2O$ and $Na_2O$.

Table 2

| | Composition wt.% | | | | | | |
|---|---|---|---|---|---|---|---|
| | Calcium sulphate dihydrate | Calcium sulphate hemihydrate | Calcium sulphate anhydrite | $CaCO_3$ | $MgCOs$ | Clays and silicates | Impurities wt.% relative to $CaSO_4$ |
| Input Mixture 4 | 90.77 | 0 | 0 | 6.05 | 0.65 | 2.31 | 12.56 |
| Comparative Example 4 | 6.87 | 80.56 | 1.95 | 7.01 | 0.63 | 2.67 | 12.42 |
| Example 4 | 1.76 | 87.77 | 0.52 | 6.45 | 0.73 | 2.53 | 11.53 |
| Input mixture 5 | 92.24 | 0 | 0 | 3.72 | 1.83 | 1.89 | 10.20 |
| Comparative example 5 | 6.85 | 83.90 | 0.22 | 4.49 | 1.99 | 2.13 | 10.21 |
| Example 5 | 2.82 | 86.57 | 2.01 | 3.80 | 2.28 | 2.15 | 9.63 |

Example 4 and Example 5 both show a decrease in impurities relative to CaSOt from their input mixture and their comparative examples. These examples both show that the present invention provides a decrease in the amount of impurities relative to the amount of calcium sulphate from the amount of impurities in the input mixture. The examples also show that the present invention provides a more significant decrease in the amount of impurities relative to the amount of calcium sulphate than the dry calcination process. Therefore, the examples show that the present invention provides an improved process for the production of calcium sulphate hemihydrate with reduced impurities.

The composition % for each sample was normalised to give a total of 100%.

The impurities wt.% relative to CaSOtwas calculated using the following formula:

$$\text{impurities relative to CaSO4} = \frac{total\ impurities}{(total\ calcium\ sulphate)} * 100$$

where

$$\text{total impurities} = CaCO3 + MgCO3 + Clays\ and\ silicates$$

and

$$total\ calcium\ sulphate =$$

$$\left[\frac{Calcium\ sulphate\ dihydrate}{172} + \frac{calcium\ sulphate\ hemihydrate}{145}\right.$$

$$\left. + \frac{calcium\ sulphate\ anhydrite}{136}\right] * 136$$

Example slurries using recycled gypsum were also used to prepare alpha-calcium sulphate hemihydrate according to the present invention. Example 6 was prepared from input mixture 6 using 60% Natural Gypsum from a third quarry and 40% Recycled Gypsum. Recycled Gypsum used is scrap from a plant using the Natural Gypsum from the third quarry as a raw material. The input and output mixtures were characterised in the same way as described above for Examples 4 and 5. The results of the materials characterisations are set out in Table 3 below.

Table 3

| | Composition wt.% | | | | | | |
|---|---|---|---|---|---|---|---|
| | Calcium sulphate dihydrate | Calcium sulphate hemihydrate | Calcium sulphate anhydrite | $CaCO_3$ | $MgCO_3$ | Clays and silicates | Impurities wt.% relative to $CaSO_4$ |
| Input mixture 6 | 80.24 | 0 | 1.01 | 4.84 | 5.22 | 7.88 | 27.83 |
| Example 6 | 3.91 | 75.50 | 0.00 | 8.06 | 2.71 | 8.86 | 26.56 |

Example 6 shows a decrease in impurities relative to $CaSO_4$ from input mixture 6. Example 6 shows that the present invention provides a process for the production of alpha-calcium sulphate hemihydrate from recycled gypsum with reduced impurities.

Embodiment 3:

Example 7 was prepared from input mixture 7 using lacto gypsum created as a waste product in the polylactic acid manufacturing industry. The input mixture 7 was combined with water in a 1:1 ratio of lacto gypsum to water. Succinic acid was added to the resulting slurry give a succinic acid concentration of 0.86 g/L. The pH of the slurry was then adjusted to 3.2, 5.9, 6.7, 10.8, and 11.2 using industrial grade soda. For the sample adjusted to a pH of 11.2, the succinic acid concentration was doubled. The resulting slurries were individually loaded and calcined in the reactor at temperatures of 140°C for 30 minutes.

The particle size distributions of each of the calcined examples was measured using laser analysis. Figure 1 shows the particle size distribution span for the alpha-calcium sulphate hemihydrate resulting from the wet calcination of each of the pH adjusted input mixtures. Figure 1 also shows the particle size distribution span for alpha-calcium sulphate hemihydrate currently used in plasterboard manufacture as a reference. Figure 1 shows that increasing the pH of the input mixture to at least 5.9, allows the provision of calcined alpha-calcium sulphate hemihydrate with a span comparable to the reference alpha-calcium sulphate hemihydrate.

The concentration of lactic acid in the input mixture 7, before calcination, and the Example 7, after calcination, was also measured. The mixtures were filtered and $0.45\mu m$ samples were taken and analysed. The pH of input mixture 7 was adjusted from 4.0 to 7.3 using industrial grade soda before calcination. The filtrate from input mixture 7 had a lactic acid concentration of 0 mg/L and the filtrate from Example 7 had a lactic acid concentration of 39.1 mg/L. Thus, the calcination process released lactic acid from the lacto gypsum and therefore the alpha-calcium sulphate hemihydrate produced by the wet calcination of the present invention has a reduced mass of the acid impurity in the alpha-calcium sulphate hemihydrate containing phase compared to the input mixture.

The lactic acid concentration was quantified as follows. In a first reaction catalysed by D-lactate dehydrogenase (D-LDH), D-lactic acid (D-lactate) was oxidised to pyruvate in the presence of nicotinamide-adenine dinucleotide ($NAD^+$). To shift the position of equilibrium of the first reaction to the pyruvate and the NADH, the pyruvate is converted to D-alanine and 2-oxoglutrate in the presence of D-GPT in a second reaction. The amount of NADH formed in the above coupled reaction is stoichiometric with the amount of D-lactic acid. The concentration of NADH is calculated using UV spectroscopy to measure the increase in absorbance at 340 nm. An equivalent set of reactions using L-lactate dehydrogenase (L-LDH) was used to calculate the concentration of L-lactic acid and the concentrations of L-lactic acid and D-lactic acid were added together to find the total lactic acid concentrations.

**Claims**

1.  A process for the production of alpha-calcium sulphate hemihydrate, the process comprising the steps of:

    providing an input mixture comprising particulate gypsum with at least one impurity;
    providing water;
    mixing the input and the water to form a gypsum slurry;
    maintaining the gypsum slurry under raised pressure and temperature to convert the particulate gypsum into alpha-calcium sulphate hemihydrate; and
    providing an output slurry comprising a first phase and a second phase;
    **characterised in that**
    the first phase of the output slurry comprises alpha-calcium sulphate hemihydrate and the first phase comprises a greater amount of alpha-calcium sulphate hemihydrate than the second phase and;
    the at least one impurity at a reduced weight % in the first phase of the output slurry compared to the input mixture; and/or
    the at least one impurity at a reduced activity compared to the input mixture; and/or
    the at least one impurity in a different chemical form or with a different chemical structure compared to the input mixture.

2.  The process of claim 1, wherein the raised temperature is in the range 130-150°C inclusive.

3.  The process of claim 1 or claim 2, wherein the average residence time of the gypsum slurry at raised temperature is at least 30 minutes, preferably wherein the average residence time is at least 40 minutes.

4.  The process of any of the preceding claims, wherein the process comprises a cooling step where the temperature of the alpha-calcium hemihydrate slurry is reduced and the pressure is brought to atmospheric pressure.

5.  The process of any of the preceding claims, wherein the process comprises a dewatering step where water is removed from the alpha-calcium sulphate hemihydrate slurry.

6.  The process of claim 5, wherein the dewatering step comprises separating the alpha-calcium sulphate hemihydrate slurry into a filtrate and an alpha-calcium sulphate hemihydrate cake.

7.  The process of claim 6, wherein the filtrate is re-used in the process.

8.  The process of claim 6 or claim 7, wherein the filtrate comprises at least some of the at least one impurity.

9.  The process of any of the preceding claims, wherein the step of maintaining the gypsum slurry under raised pressure and temperature to convert the particulate gypsum into alpha-calcium sulphate hemihydrate is carried out within at least one calcination vessel.

10. The process of claim 9, wherein the step of maintaining the gypsum slurry under raised pressure and temperature to convert the particulate gypsum into alpha-calcium sulphate hemihydrate is carried out within a first and second calcination vessel, and further wherein the temperature in the second calcination vessel is higher than the temperature within the first calcination vessel.

11. The process of any one of the preceding claims, wherein the step of providing water comprises substantially continuously providing water.

12. The process of any one of the preceding claims, wherein the process comprises providing a growth modifier in the gypsum slurry.

13. The process of any of the preceding claims wherein the impurity comprises a water soluble salt.

14. The process of any of the preceding claims, wherein the particulate gypsum comprises lacto gypsum.

15. The process of any one of the preceding claims, wherein the input comprises natural gypsum, recycled gypsum, and/or synthetic gypsum.

9

FIG. 1

Europäisches
Patentamt

European
Patent Office

Office européen
des brevets

# EUROPEAN SEARCH REPORT

**Application Number**

EP 24 30 5475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 3 206 805 A1 (SAINT GOBAIN PLACO [FR]) 22 December 2022 (2022-12-22) * the whole document * | 1-15 | INV. C04B11/028 C04B11/032 |
| X | CN 105 174 760 B (KINGENTA ECOLOGICAL ENGINEERING GROUP CO LTD ET AL.) 29 March 2017 (2017-03-29) * the whole document * | 1-15 | |
| X | CN 101 734 871 A (BEIJING BUILDING MATERIALS ACA) 16 June 2010 (2010-06-16) * the whole document * | 1-15 | |

**TECHNICAL FIELDS SEARCHED (IPC)**

C04B

The present search report has been drawn up for all claims

| Place of search | Date of completion of the search | Examiner |
|---|---|---|
| Munich | 22 August 2024 | Roesky, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5475

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2024

| Patent document cited in search report | | Publication date | Patent family member(s) | | Publication date |
|---|---|---|---|---|---|
| CA 3206805 | A1 | 22-12-2022 | BR 112023019452 | A2 | 28-11-2023 |
| | | | CA 3206805 | A1 | 22-12-2022 |
| | | | CL 2023003069 | A1 | 03-05-2024 |
| | | | CN 116940528 | A | 24-10-2023 |
| | | | EP 4105178 | A1 | 21-12-2022 |
| | | | JP 2024523961 | A | 05-07-2024 |
| | | | US 2024124319 | A1 | 18-04-2024 |
| | | | WO 2022263217 | A1 | 22-12-2022 |
| CN 105174760 | B | 29-03-2017 | NONE | | |
| CN 101734871 | A | 16-06-2010 | NONE | | |

For more details about this annex : see Official Journal of the European Patent Office, No. 12/82